Europäisches Patentamt

**European Patent Office**

Office européen des brevets

(11) Publication number: **0 064 619**
**A1**

(12) # EUROPEAN PATENT APPLICATION

(21) Application number: **82103264.6**

(22) Date of filing: **19.04.82**

(51) Int. Cl.³: **G 02 B 7/26**

(30) Priority: **07.05.81 JP 67595/81**

(43) Date of publication of application:
**17.11.82 Bulletin 82/46**

(84) Designated Contracting States:
**DE FR GB**

(71) Applicant: **TOYOTA JIDOSHA KOGYO KABUSHIKI
KAISHA**
**1, Toyota-cho Toyota-shi
Aichi-ken 471(JP)**

(71) Applicant: **SUMITOMO ELECTRIC INDUSTRIES
LIMITED**
**No. 15, Kitahama 5-chome Higashi-ku
Osaka-shi Osaka(JP)**

(72) Inventor: **Moriyama, Masakazu
10, Toyota-cho Toyota-shi
Aichi(JP)**

(72) Inventor: **Shinohara, Toshio
49-11, 5-chome Kosaka-cho Toyota-shi
Aichi(JP)**

(72) Inventor: **Hayashi, Kyozo c/o Osaka Works of
Sumitomo
Electric Industries, Ltd. 1-3, Shimaya 1-chome
Konohana-ku Osaka(JP)**

(72) Inventor: **Noda, Shigeru c/o Osaka Works of Sumitomo
Electric Industries, Ltd. 1-3, Shimaya 1-chome
Konohana-ku Osaka(JP)**

(72) Inventor: **Sakamoto, Fukuma c/o Osaka Works of
Sumitomo
Electric Industries, Ltd. 1-3, Shimaya 1-chome
Konohana-ku Osaka(JP)**

(74) Representative: **Glawe, Richard, Dr. et al,
Dr. Richard Glawe Dipl.-Ing. Klaus Delfs Dr. Walter Moll
Dr. Ulrich Mengdehl Dr. Heinrich Niebuhr Postbox
260162
D-8000 München 26(DE)**

(54) Optical connector.

(57) An optical connector is proposed which includes a male member (1) carrying photoelectric elements (6,7) and a female member (20) carrying optical fibers (24). A sealing member (29) is mounted therebetween to seal out moisture.

FIG. 2

EP 0 064 619 A1

OPTICAL CONNECTOR

The present invention relates to an optical connector for connecting optical fibers with photoelectric elements or other optical fibers and particularly to an optical connector constructed so as to be waterproof.

Conventional optical connectors include a female member carrying the optical fibers, a male member carrying the photoelectric elements, and O-rings mounted between these two members in grooves formed in the outer wall of the male member to prevent water from permeating into the connector.

Such conventional optical connectors were insufficient to seal out water. If used in cars, for example, they are sometimes exposed to a large amount of water e.g. when the car is washed or is running in heavy rain. In such cases, water carrying dust can pass through the O-rings and invade into the inside of the connector, deteriorating the photoelectric elements. Also, their invasion into the connection between the optical fibers and the photo-electric elements decreases the amounts of light received and emitted. This is detrimental to an accurate signal transmission. Therefore, the prevention from water permeation is essential.

An object of the present invention is to provide an optical connector which is so constructed as to be substantially completely waterproof.

Other features and advantages of the present invention will become apparent from the following description taken with reference to the accompanying drawings, in which:

Fig. 1 is a vertical sectional view of a conventional optical connector;

Fig. 2 is a vertical sectional view of the first embodiment of this invention;

Fig. 3 is an enlarged sectional view of a portion of the second embodiment thereof; and

Fig. 4 is a similar view of the third embodiment thereof.

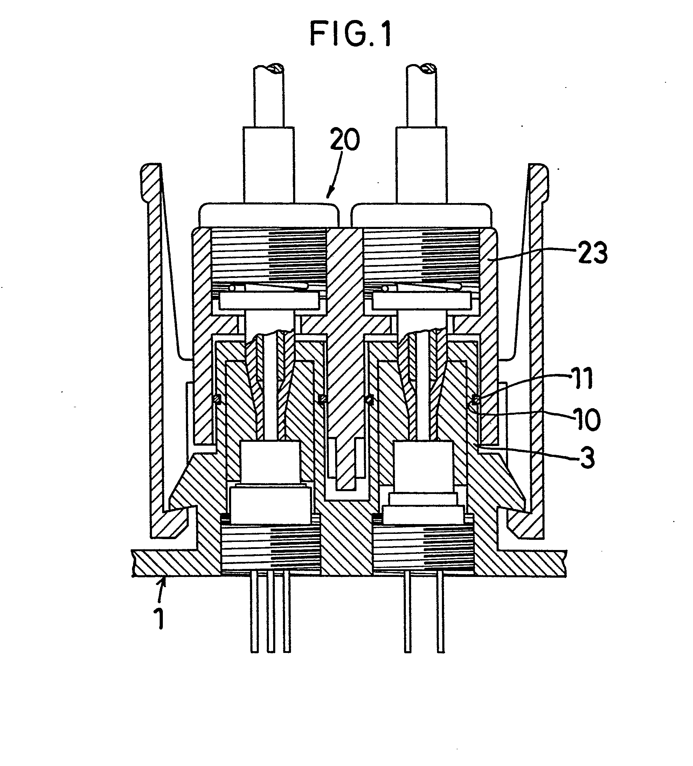

Referring firstly to Fig. 1 showing a conventional optical connector, it includes a male member 1 having a pair of support tubes 3 for supporting photoelectric elements and a female member 20 having a pair of plug tubes 23 which are adapted to be mounted on the respective support tubes 3. The support tubes are each formed with an annular groove 10 in their outer peripheral surface. An O-ring 11 is mounted in each of the grooves 10 so as to be in a sealing contact with the inner wall of the plug tube 23 to make the connector waterproof.

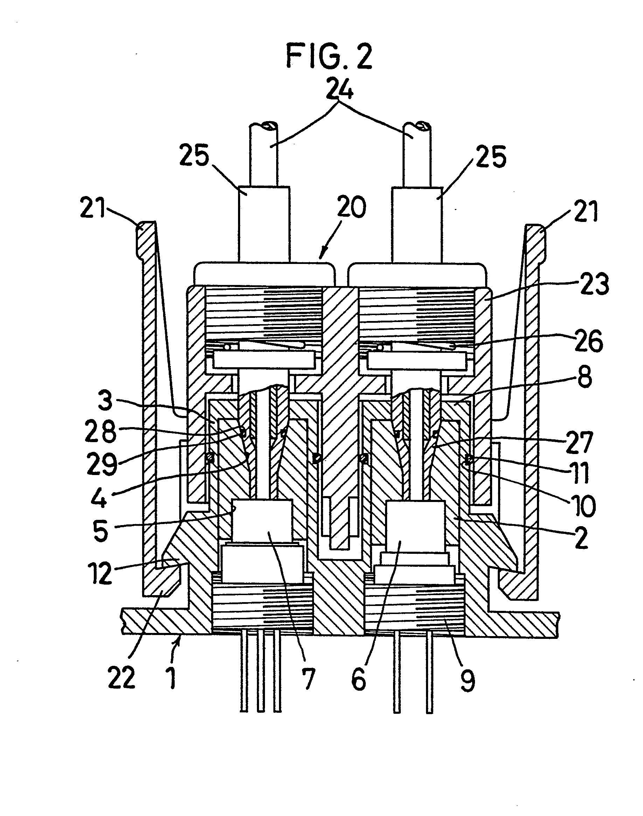

Referring to Fig. 2 showing the first embodiment of this invention, it includes a male member 1 and a female member 20. The male member has a pair of support tubes 3 which each contain a sleeve 2. The sleeves are formed with

- 2 -

a tapered bore 4 for the plug, said bore terminating with an enlarged hole 5 for a photoelectric element. The hole 5 of one sleeve 2 receives a light emitting element 6 and the hole of the other sleeve receives a light receiving element 7. The sleeves 2 and the elements 6 and 7 are held in position by and between flanges 8 of the support tubes 3 at one end thereof and hollow bolts 9 screwed from the other end of the support tubes.

The support tubes 3 are formed with an annular groove 10 at their outer periphery. An O-ring 11 is mounted in each of the grooves 10 to make the connector waterproof.

The female member 20 is provided with a control plate 21 at each side thereof with its middle portion secured to the female member. When its upper end is pressed inwardly, the lower end moves outwardly. A jaw 22 at the lower end of the control plate 21 is adapted to engage a shoulder 12 formed on the support tube 3 when the female member 20 is connected to the male member 1.

The female member 20 is formed with two plug tubes 23 corresponding to the support tubes 3 of the male member 1 to axially movably support a plug 25 secured to the end of an optical fiber 24 so as to enclose it. The plug 25 has such a shape as to fit in the tapered bore 4 of the associated sleeve 2. The plug 25 is urged downwardly by means of a coil spring 26 provided inside of the plug tube 23.

In accordance with the present invention, each plug 25 is formed with an annular groove 28 at its tapered portion 27 and an O-ring 29 is mounted in the annular groove to seal out moisture.

In use, the female member 20 is lowered onto the male member 1 and they are brought into engagement with each other by engaging the jaw 22 of the control plate 21 under the shoulder 12 on the male member 1. Now, the support tubes 3 are supported concentrically in the plug tubes 23. The tip of the plug 25 fits in the tapered bore 4 in the sleeve 2 and are supported concentrically. The tip of the optical fiber 24 is pressed against the end surface of the associated element 6 or 7 by means of the coil spring 26. The O-ring 29 butts against the inner wall of the tapered bore 4 in the sleeve 2 under the action of the coil spring 26. The O-ring 11 is in a sealing contact with the inner wall of the plug tube 23.

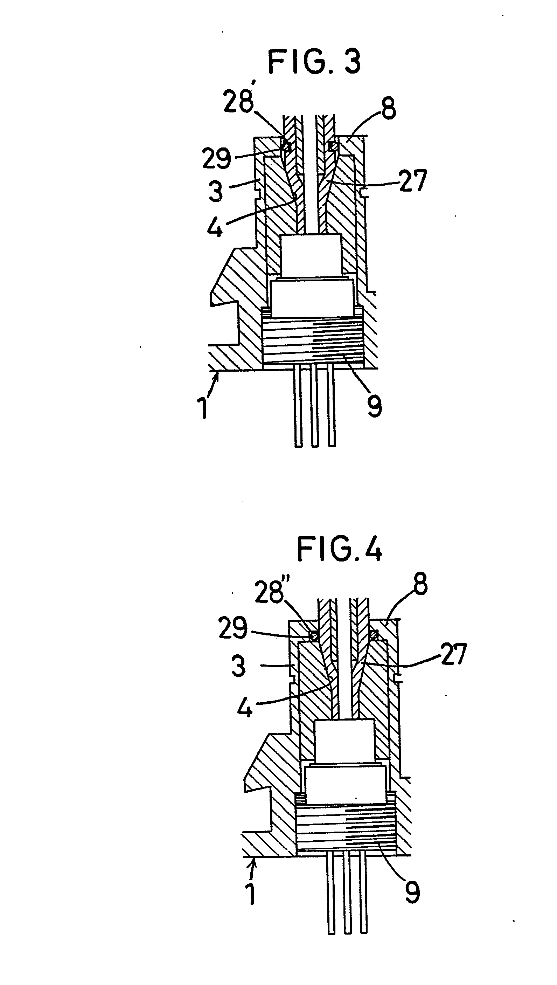

Fig. 3 shows another embodiment in which an annular groove 28' is formed in the plug 25 at its straight portion, not at its tapered portion.

Fig. 4 shows a further embodiment in which an annular groove 28" is formed not in the plug 25, but in the support tube 3 at the inner wall of its flange 8.

In order to decrease the frictional resistance of the O-ring, it may be made of ordinary rubber coated with Teflon (trademark), or silicon rubber or acryl rubber.

Although in the preferred embodiments connectors for

- 4 -

connection between the photoelectric elements and the optical fibers have been shown, the present invention can also be applied to connectors for connection between the optical fibers.

It will be understood from the foregoing that by providing sealing means such as an O-ring round the plug enclosing the optical fibers so that it will be pressed against the inner wall of the sleeve, the optical connector of the present invention can substantially completely seal out moisture.

What we claim is:

1.  An optical connector including a female member for supporting at least one plug attached to the end of an optical fiber and a male member having a hole for said plug, the improvement comprising a sealing means mounted on said plug.

2.  The optical connector as claimed in claim 1 wherein said sealing means is an O-ring.

3.  The optical connector as claimed in claim 1 wherein said sealing means is mounted in an annular groove formed in the outer periphery of said plug.

4.  The optical connector as claimed in claim 1 wherein said sealing means is mounted in an annular groove formed in the inner periphery of a support tube of said male member for supporting the photoelectric elements.

# FIG.1

# FIG. 2

## FIG. 3

28 8
29
3
4 27

1 9

## FIG. 4

28" 8
29
3 27
4

1 9

European Patent
Office

**EUROPEAN SEARCH REPORT**

0064619
Application number

EP 82 10 3264.6

| Category | Citation of document with indication, where appropriate, of relevant passages | Relevant to claim | CLASSIFICATION OF THE APPLICATION (Int. Cl. ³) |
|---|---|---|---|
| | **DOCUMENTS CONSIDERED TO BE RELEVANT** | | |
| A | US - A - 3 947 182 (INTERNATIONAL TELEPHONE & TELEGRAPH CORP.) <br> * column 2, lines 49 to 68 * <br> --- | 1-3 | G 02 B 7/26 |
| A | GB - A - 2 027 932 (CIE INDUSTRIELLE DES TELECOMMUNICATIONS) <br> * page 1, lines 18 to 46 * <br> -- | 1,3 | |
| A | GB - A - 2 041 559 (OLYMPUS OPTICAL CO. LTD.) <br> * page 1, lines 25 to 42 * <br> ---- | 1 | TECHNICAL FIELDS SEARCHED (Int.Cl. ³) <br><br> G 02 B 5/14 <br> G 02 B 5/16 <br> G 02 B 7/26 |

CATEGORY OF CITED DOCUMENTS

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

The present search report has been drawn up for all claims

| Place of search | Date of completion of the search | Examiner |
|---|---|---|
| Berlin | 07-07-1982 | BOTTERILL |

EPO Form 1503.1  06.78